# EUROPÄISCHE PATENTSCHRIFT

(11) **EP 0 496 096 B1**
(45) Veröffentlichungstag und Bekanntmachung des Hinweises auf die Patenterteilung: **21.06.1995**
(21) Anmeldenummer: 91122044.0
(22) Anmeldetag: 01.01.1992
(51) Int. Cl.: B01D 53/86

(54) **Verfahren zum Entfernen von Stickstoffoxiden aus einem Abgas**
Process for removing nitrogen oxides from a waste gas
Procédé d'élimination des oxydes d'azote d'un gaz d'échappement

(30) Priorität: 24.01.1991 DE 4102075
(43) Veröffentlichungstag der Anmeldung: 29.07.1992
(73) Patentinhaber: VEBA OEL AG, 45896 Gelsenkirchen (DE)
(72) Erfinder: Hedden, Kurt, Prof. Dr., W-7500 Karlsruhe 51 (DE); Schön, Norbert, Dipl.-Ing., W-6920 Sinsheim (DE)
(74) Vertreter: Berg, Dirk, Dr.

(56) Entgegenhaltungen:
- WO-A-89/07975
- DE-A- 3 505 354
- DE-A- 3 744 388
- DE-C- 3 637 871

## Beschreibung

Die Erfindung betrifft ein Verfahren zum Entfernen von Stickstoffoxiden aus einem Abgas durch selektive Reduktion mit Ammoniak in einer Katalysatorzone.

Zur Verminderung von Stickstoffoxidemissionen ist das SCR-Verfahren ("Selective-Catalytic-Reduction"-Verfahren) bekannt und hat zunehmend an Bedeutung gewonnen. Bei diesem Verfahren werden die in Feuerungsabgasen enthaltenen Stickstoffoxide (nachfolgend vereinfacht "NO" genannt) mit Ammoniak an einem Katalysator reduziert. Dieser enthält als aktive Komponente üblicherweise Vanadium- und/oder Wolframoxid auf einem keramischen Träger. Ferner eignen sich Zeolithe als Aktivkomponente.

Nach der Stöchiometrie reagiert 1 Mol NO mit 1 Mol NH₃ gemäß der Formelgleichung

4 NO + 4 NH₃ + O₂ --------- 4 N₂ + 6 H₂O.

Das stationäre SCR-Verfahren wird in der Regel so durchgeführt, daß dem zu behandelnden Abgas vor dem Eintritt in den Reaktor das 0,8fache der stöchiometrisch benötigten Menge Ammoniak zugegeben wird. Durch diese unterstöchiometrische Ammoniakmenge wird zwar ein unerwünschter "Ammoniakschlupf" (d. h. ein Austreten von nicht umgesetztem Ammoniak aus dem Ende der Katalysatorzone), wie er bei einer größeren Ammoniakmenge auftreten würde, vermieden, jedoch ist der NO-Reduktionsgrad auf etwa 80 % begrenzt.

Aus der DE-A-37 44 388 ist ein Verfahren zum Entfernen von Stickstoffoxiden aus Abgasen durch selektive Reduktion mit Ammoniak in einer Katalysatorzone bekannt. Dabei wird das Abgas periodisch abwechselnd in entgegengesetzter Strömungsrichtung durch die Reaktionszone hindurchgeführt. Zu Beginn jeder Periode wird das Abgas zusammen mit einer überstöchiometrischen Menge an Ammoniak, bezogen auf die Stickstoffoxide, eingespeist. Die Ammoniakzufuhr wird abgebrochen, bevor nichtumgesetztes Ammoniak zusammen mit dem Abgas die Reaktionszone verläßt, und die Strömungsrichtung der Abgase wird dann umgekehrt. Bei diesem Verfahren läßt sich aber der Ammoniakschlupf nicht mit Sicherheit vermeiden.

In der DE-A-35 05 354 sind ein Verfahren und eine Vorrichtung zur Entfernung unerwünschter gasförmiger Bestandteile aus einem Rauchgas beschrieben. Bei diesem Verfahren wird vor der Zuführung des Rauchgases zum Katalysator Ammoniak in stöchiometrischen Mengen zugeführt. Deshalb kann bei diesem Verfahren ein Ammoniakschlupf praktisch nicht auftreten und es werden auch keine Angaben zu dessen Verhinderung gemacht. Jedoch ist der NO-Reduktionsgrad des Verfahrens nicht zufriedenstellend.

Der Erfindung liegt daher die Aufgabe zugrunde, ein Verfahren der eingangs genannten Art anzugeben, bei dem unter Erreichung eines sehr hohen NO-Umsatzes der Ammoniakschlupf zuverlässig vermieden werden kann.

Diese Aufgabe löst die Erfindung durch ein Verfahren zum Entfernen von Stickstoffoxiden aus einem Abgas durch selektive Reduktion mit Ammoniak in einer Katalysatorzone, wobei
- das Abgas und das Ammoniak die Katalysatorzone während eines bestimmten Verfahrensabschnitts in der einen Richtung und während eines nachfolgenden Verfahrensabschnitts in der Gegenrichtung gemeinsam durchströmen,
- das Ammoniak nur für eine gewisse Zeitspanne während dieser Verfahrensabschnitte in überstöchiometrischer Menge, bezogen auf die im gleichzeitig eingespeisten Abgas enthaltenen Stickstoffoxide, der Katalysatorzone zugeführt wird,
- während der restlichen Zeit dieser Verfahrensabschnitte der Katalysatorzone kein Ammoniak mehr zugeführt wird,
- die im zeitlichen Mittel zugeführte Ammoniakmenge sowohl entsprechend der im Abgas enthaltenen Menge an Stickstoffoxiden als auch entsprechend dem erreichten Reduktionsgrad der Stickstoffoxide eingestellt wird,
- die Strömungsrichtung des Abgases umgekehrt wird, bevor das Ammoniak, in seiner Strömungsrichtung betrachtet, aus dem Ende der Katalysatorzone austritt, sowie
- die genannten Verfahrensabschnitte abwechselnd beliebig oft wiederholt werden,
dadurch gekennzeichnet, daß
- das Ammoniak in die Katalysatorzone an einem Ort eintritt, der in der Strömungsrichtung des Abgases dem Ort des Abgaseintritts nachgeordnet ist, und
- eine Katalysatorzone eingesetzt wird, die aus mindestens zwei Teilzonen besteht.

Beim erfindungsgemäßen Verfahren wird der Ammoniakschlupf dadurch vermieden, daß zwischen demjenigen Ende der Katalysatorzone, wo das Abgas eintritt, und dem Ort des Ammoniakeintritts in die Katalysatorzone eine Pufferzone vorliegt, die praktisch ammoniakfrei ist, wenn jenes Abgaseintrittsende der Katalysatorzone nach der Umkehrung der Strömungsrichtung des Abgases wieder zum Abgasaustrittsende der Katalysatorzone wird.

Dadurch, daß der Ort des Ammoniakeintritts in die Katalysatorzone dem Ort des Abgaseintritts in diese Zone nachgeordnet ist, ergeben sich mindestens zwei Teilzonen des Katalysators. In Strömungsrichtung des Abgases befindet sich eine (aufstromseitige) Teilzone vor dem Ort des Ammoniakeintritts, eine andere (abstromseitige) Teilzone nach diesem Ort. Es ist auch möglich, das Ammoniak an verschiedenen Orten der Katalysatorzone einzuspeisen, z. B. in Abhängigkeit von der Strömungsrichtung des Abgases. Dann ergeben sich mehr als zwei Teilzonen des Katalysators.

Beim erfindungsgemäßen Verfahren zur selektiven katalytischen Reduktion von Stickstoffoxiden in Rauchgasen mit Restsauerstoffgehalt oder stickstoffhaltigen Abgasen von Verbrennungsprozessen oder sonstigen thermischen Prozessen bei erhöhter Temperatur sind mindestens zwei hintereinanderliegende Teilzonen des meist in Honigwabenstruktur aufgebauten Feststoffkatalysators vorgesehen.

Hierbei werden das zu behandelnde Abgas sowie ein gasförmiges Ammoniak enthaltendes Reduktionsmittel in sich wiederholenden Zyklen von je vier Phasen I bis IV in der Weise den Teilzonen des Katalysators zugeführt, daß während der Phasen I und III das Abgas einer aufstromseitigen Teilzone und das Reduktionsmittel einer abstromseitig davon befindlichen Teilzone zugeführt wird und während der Phasen II und IV die Zufuhr von Reduktionsmittel unterbrochen ist.

Fur die Phasen III und IV wird die Strömungsrichtung von Abgas und Reduktionsmittel umgekehrt, und das Abgas wird dann derjenigen Teilzone zugeführt, die der während der Phasen I und II mit Abgas beaufschlagten Teilzone nachgeordnet war. Dementsprechend wird das Reduktionsmittel dann während der Phase III in diejenige Teilzone eingespeist, die während der Phasen I und II mit Abgas beschickt worden ist.

Die Reduktionsmittelzufuhr während der Phasen I und III erfolgt bezüglich der Stickstoffoxidkonzentration in dem Abgas in einer überstöchiometrischen Menge.

Gemäß einer bevorzugten Ausführungsform des erfindungsgemäßen Verfahrens wird eine Katalysatorzone eingesetzt, die in der Strömungsrichtung des Abgases zwei hintereinanderliegende, etwa gleich lange Teilzonen aufweist, zwischen denen das Ammoniak zugeführt wird.

Bei einer weiteren bevorzugten Ausführungsform benutzt man eine Katalysatorzone, die in der Strömungsrichtung des Abgases drei hintereinanderliegende Teilzonen aufweist, wobei das Ammoniak während eines bestimmten Verfahrensabschnitts zwischen der ersten und der zweiten Teilzone und während eines nachfolgenden Verfahrensabschnitts mit entgegengesetzter Abgasströmungsrichtung zwischen der zweiten und der dritten Teilzone zugeführt wird.

Die Erfindung wird nachfolgend unter Bezugnahme auf die beigefügten Zeichnungen beispielhaft erläutert.

Es zeigen
- Fig. 1a: bis 1d schematisch Phasen I bis IV des Verfahrens unter Einsatz einer Katalysatorzone mit drei Teilzonen;
- Fig. 2: eine Darstellung der Beladung der in drei Teilen angeordneten Katalysatorzone mit Ammoniak in aufeinanderfolgenden Verfahrenzuständen a bis i;

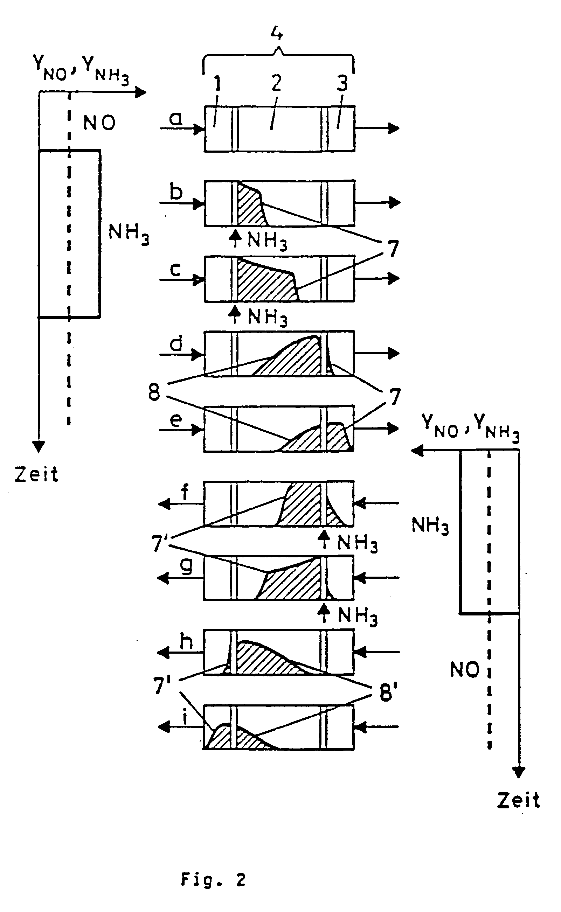

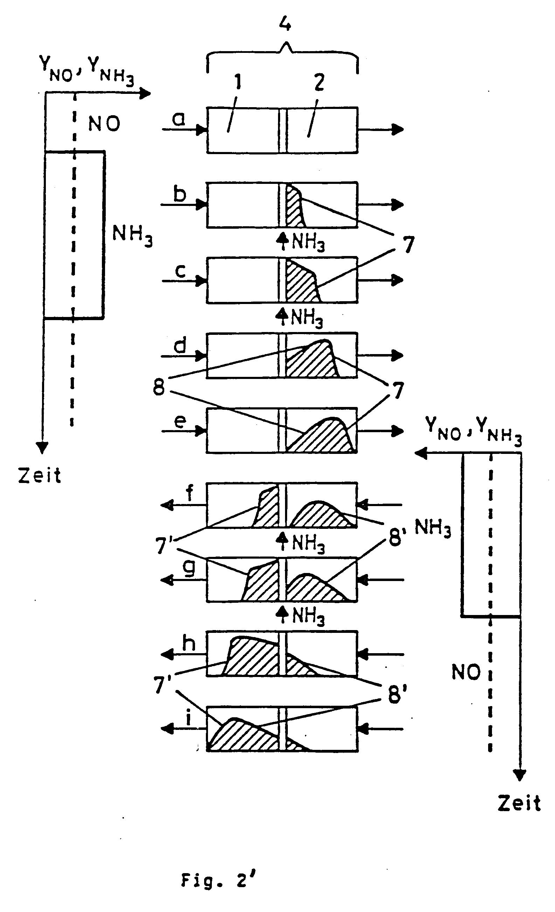

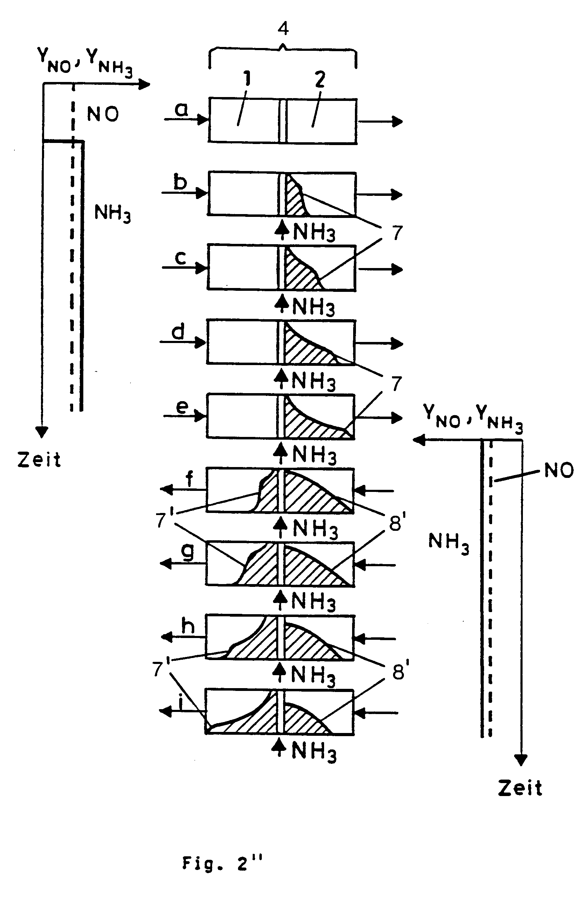

- Fig. 2': eine Darstellung der Beladung der in zwei Teilen angeordneten Katalysatorzone mit Ammoniak in aufeinanderfolgenden Verfahrenszuständen a bis i; und
- Fig. 2'': eine Darstellung der Beladung der in zwei Teilen angeordneten Katalysatorzone mit Ammoniak in aufeinanderfolgenden Verfahrenszuständen a bis i bei kontinuierlicher Ammoniakzugabe.

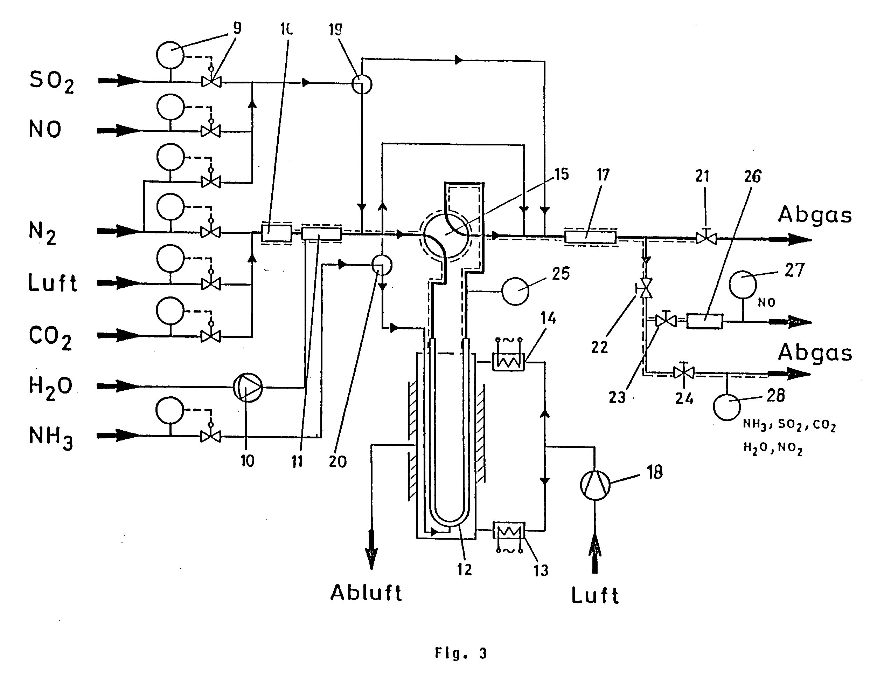

- Fig. 3: ein Verfahrensfließbild einer Vorrichtung zur Durchführung des Verfahrens.

Das Prinzip des erfindungsgemäßen Verfahrens wird nachfolgend an den Fig. 1a bis 1d und Fig. 2 erläutert.

Teilzonen 1, 2, 3 des Katalysators bilden die gesamte Katalysatorzone 4. Das zu behandelnde Abgas wird in den Fig. 1a bis 1d an der linken Seite kontinuierlich zugeführt und das gereinigte Abgas an der rechten Seite abgeführt. Das Ammoniak wird periodisch über zwei Zuleitungen 5, 6 des Reaktors während der Phasen 1 (Fig. 1a) und III (Fig. 1c) in überstöchiometrischer Menge eingespeist. In der Phase I tritt das Ammoniak zwischen den Teilzonen 1 und 2, dagegen in der Phase III zwischen den Teilzonen 2 und 3 in die Katalysatorzone 4 ein. Das in den Phasen I und III nicht verbrauchte Ammoniak wird adsorptiv am Katalysator gebunden.

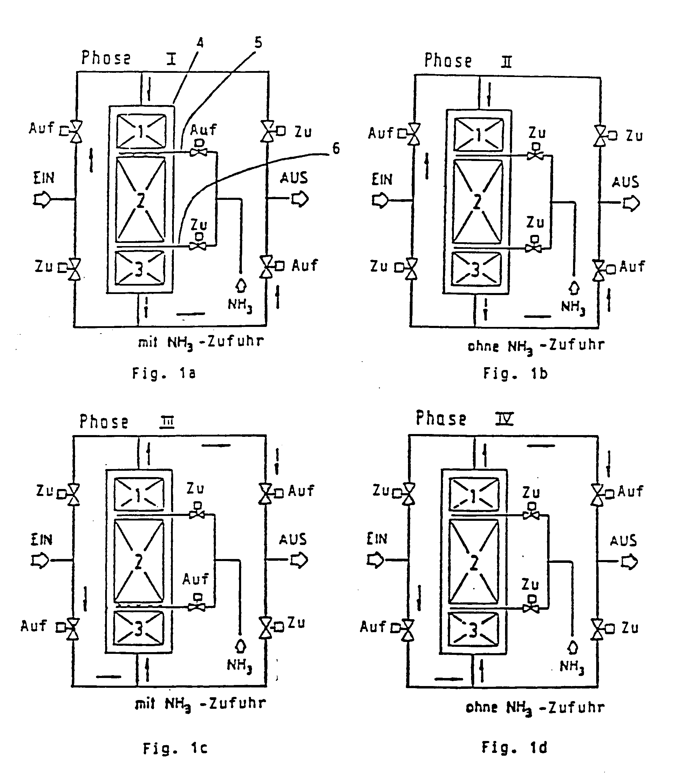

In den Phasen II (Fig. 1b) und IV (Fig. 1d) des Verfahrens wird dieses überschüssige adsorbierte Ammoniak durch die Reaktion mit den Stickstoffoxiden des Abgases wieder verbraucht.

Die Teilzone 1 dient sowohl der Reduktion der Stickstoffoxide als auch der Feinreinigung des Abgases von restlichem Ammoniak während der Phasen III und IV. Entsprechend dient die Teilzone 3 gleichfalls dieser Reduktion und Feinreinigung während der Phasen I und II. Nach der Änderung der Strömungsrichtung des Abgases in der Katalysatorzone 4 werden die mit Ammoniak beladenen Teilzonen 1 bzw. 3 durch die Reaktion mit den Stickstoffoxiden im Abgas schnell wieder von Ammoniak befreit.

Der Ablauf des erfindungsgemäßen Verfahrens im einzelnen wird nachfolgend mittels Fig. 2 erläutert. Sie zeigt die Ammoniakbeladung der Katalysatorzone 4 zu verschiedenen Zeiten (entsprechend den in Fig. 2 dargestellten Verfahrenszuständen a bis i). Die aus den Teilzonen 1, 2, 3 bestehende Katalysatorzone 4 wird von einem Stickstoffoxid enthaltenden Abgas von links nach rechts durchströmt (Zustand a).

Zu einem beliebigen Zeitpunkt wird zwischen den Teilzonen 1 und 2 dem Abgas eine überstöchiometrische Ammoniakmenge zugegeben. Das überschüssige, bei der Umsetzung mit den Stickstoffoxiden nicht verbrauchte Ammoniaka wird in der Katalysatorzone (Teilzone 2) adsorbiert. Es kommt zur Ausbildung einer Adsorptionsfront 7, die mit fortschreitender Zeit weiter in die Katalysatorzone 4 hineinwandert (Zustand b und c). Die Abnahme der Ammoniakbeladung entlang der Katalysatorzone 4 an der Adsorptionsfront 7 entsteht dadurch, daß durch die Reduktion der Stickstoffoxide mit dem Ammoniak der Ammoniakpartialdruck und somit auch die Beladung des Katalysators mit Ammoniak in der Strömungsrichtung des Abgases abnimmt.

Wird nun die Ammoniakzugabe abgeschaltet, so wird das am Katalysator adsorbierte Ammoniak durch die Reaktion mit den Stickstoffoxiden verbraucht. Ein Teil des adsorbierten Ammoniaks wird desorbiert und von dem eintretenden, noch ammoniakfreien Abgas aufgenommen sowie im weiteren Verlauf der Durchströmung der Katalysatorzone 4 wieder in unbeladenen Abschnitten derselben adsorbiert. Es bildet sich also eine Desorptionsfront 8 aus, die wie die weiterhin bestehende Adsorptionsfront 7 durch die Katalysatorzoen 4 wandert (Zustand d und e).

Mit zunehmender Zeit nimmt die Ammoniakbeladung der Katalysatorzone 4 ab, und die Adsorptionsfront 7 wandert auf das Ende der Teilzone 3 zu (Zustand e). Bevor dort ein Durchbruch von Ammoniak (Ammoniakschlupf) erfolgt, wird die Strömungsrichtung des Abgases durch die Katalysatorzone 4 umgekehrt (und läuft dann in Fig. 2 von rechts nach links) und das Ammoniak zwischen den Teilzonen 2 und 3 zugeführt (Zustand f). Auch dabei ist die Ammoniakmenge überstöchiometrisch.

Das in der Teilzone 3 durch Adsorption gespeicherte Ammoniak wird nun durch das eintretende, Stickstoffoxide enthaltende Abgas schnell wieder verbraucht, so daß diese Teilzone 3 dann für den nächsten Verfahrenszyklus als regenerierte, d. h. ammoniakfreie, Pufferzone zur Verfügung steht. Auch bei dieser Strömungsrichtung des Abgases bildet sich in der Katalysatorzone 4 eine Adsorptionsfront 7' aus, die in Fig. 2 von rechts nach links wandert (Zustand f und g).

Nach dem Abschalten der Ammoniakzugabe nimmt durch die weiterlaufende Reaktion der Stickstoffoxide mit dem Ammoniak die Beladung der Katalysatorzone 4 mit Ammoniak ab, und es bildet sich, ähnlich wie bereits oben beschrieben, eine Desorptionsfront 8' aus (Zustand h und i).

Bevor die Adsorptionsfront 7' in der Teilzone 1 das Ende der Katalysatorzone 4 erreicht, wird die Strömungsrichtung des Abgases erneut umgekehrt (und läuft dann in Fig. 2 von links nach rechts), wie oben beschrieben. Der gesamte Verfahrenszyklus wird nun beliebig oft wiederholt.

Bei einer anderen Ausführungsform des erfindungsgemäßen Verfahrens besteht die Katalysatorzone 4 aus zwei etwa gleichgroßen Teilzonen, und die überstöchiometrische Ammoniakzugabe erfolgt zwischen diesen beiden Teilzonen. Es ergibt sich dann gemäß Fig. 2' ein analoger Ablauf der Reaktion und der Katalysatorbeladung, wie sie oben für die dreiteilige Katalysatorzone beschrieben wurde. Beim Einsatz eines Katalysators mit nur zwei Teilzonen wandert ein Ammoniak-Beladungsmaximum um die Mitte der gesamten Katalysatorzone, d. h. um den Ort der Ammoniakzugabe. Dabei können größere Katalysatorbelastungen als bei einer stationären Reaktionsführung erreicht werden, ohne daß ein Ammoniakschlupf auftritt. Bei gleicher Katalysatorbelastung läßt sich ein höherer NO-Reduktionsgrad erreichen, ohne daß an den Enden der Katalysatorzone Ammoniak durchbricht.

Gemäß einer bevorzugten Ausführungsform der Erfindung wird eine Katalysatorzone 4 eingesetzt, die in der Strömungsrichtung des Abgases zwei hintereinanderliegende, etwa gleich lange Teilzonen 1 und 2 aufweist. Die stöchiometrische Ammoniakzugabe erfolgt kontinuierlich zwischen diesen beiden Teilzonen. Gemäß Fig. 2'' wird die Katalysatorzone 4 von einem Stickstoffoxide enthaltenden Abgas von links nach rechts durchströmt (Zustand a). Nach Beginn der stöchiometrischen, kontinuierlichen Ammoniakzugabe kommt es ebenfalls zur Ausbildung einer Adsorptionsfront 7, die mit zunehmender Zeit durch den Katalysator wandert (Zustand b bis e). Bevor ein Ammoniakdurchbruch am Ende der Katalysatorzone 4 erfolgt (Zustand e), wird die Strömungsrichtung des Gases geändert. In Teilzone 2 kommt es nun zur Ausbildung einer Desorptionsfront 8', und in Teilzone 1 bildet sich die Adsorptionsfront 7' aus (Zustand f bis i). Wie in der Ausführungsform weiter oben bereits beschrieben, wandert auch hier ein Ammoniak-Beladungsmaximum um den Ort der Ammoniakzugabe. Die Enden der Katalysatorzone 4 dienen in den einzelnen Verfahrensabschnitten jeweils als Ammoniakpufferzonen.

### Beispiel 1

In Fig. 3 ist ein Fließbild einer Vorrichtung zur Durchführung des erfindungsgemäßen Verfahrens dargestellt. Die Katalysatorzone besteht dabei aus zwei gleichgroßen Teilzonen, und die Ammoniakzugabe erfolgt zwischen den beiden Teilzonen.

Mit der Vorrichtung werden Messungen des NO-Umsatzes und des Ammoniakschlupfes unter instationären Bedingungen durchgeführt. Die einzelnen Gaskomponenten werden mit Hilfe thermischer Massendurchflußregler 9 geregelt. Die Einstellung des gewünschten Wasserdampfpartialdrucks geschieht mit einer Flüssigkeitsdosierpumpe 10 und einem Verdampfer 11. Das Kernstück der Vorrichtung ist ein U-förmiger Reaktor 12, der mit elektrischen Lufterhitzern 13, 14 auf die gewünschte Reaktionstemperatur gebracht wird. Die Änderung der Strömungsrichtung des Abgases durch die Katalysatorzone im Reaktor 12 geschieht mittels eines Vierwegehahns 15.

Ferner ist die Vorrichtung mit einer Vorheizung 16 für Stickstoff, Luft und Kohlendioxid, einem Gasmischer 17 nach dem Reaktor 12, einem Luftgebläse 18 vor den Lufterhitzern 13, 14, Hähnen 19, 20 (Karlsruher Hähne), Regulierventilen 21, 22, 23, 24, einem Druckwertgeber 25 am Ausgang des Reaktors 12, einem Gaskühler 26 vor einem ersten Analysenwertgeber 27 für NO an einem Ausgang der Vorrichtung und einem zweiten Analysenwertgeber 28 für NH₃, SO₂, CO₂, H₂O und NO₂ an einem anderen Ausgang der Vorrichtung ausgerüstet. Die Analyse der einzelnen Gaskomponenten erfolgt durch UV- und IR-Absorption oder Chemilumineszenz.

Das Verfahren wurde unter folgenden Bedingungen ausgeführt:

| | |
|---|---|
| Katalysator: | zeolithhaltiger SCR-Katalysator |
| Aktivkomponente des Katalysators: | HZSM-5 |
| Anzahl der Teilzonen des Katalysators | 2, jeweils gleich lang |
| NH₃-Zugabe: | ist in der Mitte der Katalysatorzone, zwischen den beiden Teilzonen |
| Katalysatormasse: | 50 g |
| Katalysatorbelastung (0°C/1,013 bar; nach DIN 1343): | 2,13 cm³/g·s |
| Temperatur: | 400 °C |
| Druck vor Eintritt in den Reaktor: | 1,15 bar |
| NO-Eingangsvolumenanteil: | 530 ppm trocken |
| NH₃-Eingangsvolumenanteil: | 1270 ppm trocken |
| O₂-Eingangsvolumenanteil: | 5,0 Vol.-% trocken |
| H₂O-Eingangsvolumenanteil: | 5,0 Vol.-% feucht |
| Erste Änderung der Strömungsrichtung: | nach 6 min |
| Alle weiteren Änderungen der Strömungsrichtung: | jeweils nach 4 min |

Das experimentelle Ergebnis zeigt, daß der NO-Reduktionsgrad im zeitlichen Mittel 99 % beträgt und der NH₃-Schlupf während der gesamten Versuchsdauer von 2,5 Stunden kleiner als 2 ppm (feucht gemessen) ist.

### Beispiel 2

In der bereits erläuterten Fig. 3 ist das Fließbild einer Vorrichtung zur Durchführung auch der nachfolgenden Ausführungsform des Verfahrens dargestellt. Die Katalysatorzone besteht aus zwei gleichgroßen Teilzonen, und die Ammoniakzugabe erfolgt kontinuierlich zwischen den beiden Teilzonen.

Das Beispiel wurde unter folgenden Bedingungen ausgeführt:

| | |
|---|---|
| Katalysator: | Zeolithhaltiger SCR-Katalysator |
| Aktivkomponente des Katalysators: | HZSM-5 |
| Anzahl der Teilzonen des Katalysators: | 2, jeweils gleich lang |
| kontinuierlichen NH₃-Zugabe: | in der Mitte der Katalysatorzone, zwischen den beiden Teilzonen |
| Katalysatormasse: | 50 g |
| Katalysatorbelastung (0 °C, 1,013 bar): | 2,13 cm³/(g·s) |
| Temperatur: | 400 °C |
| Druck vor Eintritt in den Reaktor: | 1,15 bar |
| NO-Eingangsvolumenanteil: | 530 ppm trocken |
| NH₃-Eingangsvolumenanteil: | 570 ppm trocken |
| O₂-Eingangsvolumenanteil: | 5,0 Vol.-% trocken |
| H₂O-Eingangsvolumenanteil: | 5,0 Vol.-% feucht |
| Änderung der Strömungsrichtung: | jeweils nach 4 min |

Bei der Katalysatorbelastung bezieht sich die Volumenangabe in cm³ auf den Normzustand nach DIN 1343 bei 0 °C und 1,013 bar.

Das experimentelle Ergebnis zeigt, daß der NO-Umsatzgrad bei dieser Verfahrensvariante im zeitlichen Mittel ebenfalls 99 % beträgt und der NH₃-Schlupf bei ca. 1 ppm (feucht gemessen) liegt.

### Vergleichsbeispiel

Um den Vorteil des erfindungsgemäßen Verfahrens gegenüber dem Verfahren gemäß der DE-A-3744388 aufzuzeigen, wurde dieses bekannte Verfahren durchgeführt. Die Katalysatorzone bestand dabei aus nur einer Zone, und die NH₃-Zugabe erfolgte in das Abgas vor dessen Eintritt in die Katalysatorzone. Ansonsten wurde der Versuch in vollständiger Analogie zum obigen Beispiel ausgeführt. Es zeigte sich, daß mit dem Verfahren nach der DE-A-3744388 bei einem NO-Reduktionsgrad im zeitlichen Mittel von 97 % der NH₃-Schlupf im zeitlichen Mittel 30 ppm (feucht gemessen) betrug und damit sehr hoch lag.

## Patentansprüche

1. Verfahren zum Entfernen von Stickstoffoxiden aus einem Abgas durch selektive Reduktion mit Ammoniak in einer Katalysatorzone, wobei
- das Abgas und das Ammoniak die Katalysatorzone während eines bestimmten Verfahrensabschnitts in der einen Richtung und während eines nachfolgenden Verfahrensabschnitts in der Gegenrichtung gemeinsam durchströmen,
- das Ammoniak nur für eine gewisse Zeitspanne während dieser Verfahrensabschnitte in überstöchiometrischer Menge, bezogen auf die im gleichzeitig eingespeisten Abgas enthaltenen Stickstoffoxide, der Katalysatorzone zugeführt wird,
- während der restlichen Zeit dieser Verfahrensabschnitte der Katalysatorzone kein Ammoniak mehr zugeführt wird,
- die im zeitlichen Mittel zugeführte Amimoniakmenge sowohl entsprechend der im Abgas enthaltenen Menge an Stickstoffoxiden als auch entsprechend dem erreichten Reduktionsgrad der Stickstoffoxide eingestellt wird,
- die Strömungsrichtung des Abgases umgekehrt wird, bevor das Ammoniak, in seiner Strömungsrichtung betrachtet, aus dem Ende der Katalysatortone austritt, sowie
- die genannten Verfahrensabschnitte abwechselnd beliebig oft wiederholt werden,
dadurch gekennzeichnet, daß
- das Ammoniak in die Katalysatorzone an einem Ort eintritt, der in der Strömungsrichtung des Abgases dem Ort des Abgaseintritts nachgeordnet ist, und
- eine Katalysatorzone eingesetzt wird, die aus mindestens zwei Teilzonen besteht.

2. Verfahren nach Anspruch 1, dadurch gekennzeichnet, daß eine Katalysatorzone eingesetzt wird, die in der Strömungsrichtung des Abgases zwei hintereinanderliegende, etwa gleich lange Teilzonen aufweist, zwischen denen das Ammoniak zugeführt wird.

3. Verfahren nach Anspruch 1, dadurch gekennzeichnet, daß eine Katalysatorzone (4) eingesetzt wird, die in der Strömungsrichtung des Abgases drei hintereinanderliegende Teilzonen (1, 2, 3) aufweist, sowie das Ammoniak während eines bestimmten Verfahrensabschnitts zwischen der ersten und der zweiten Teilzone (1, 2) und während eines nachfolgenden Verfahrensabschnitts mit entgegengesetzter Abgasströmungsrichtung zwischen der zweiten und der dritten Teilzone (2, 3) zugeführt wird.

4. Verfahren zum Entfernen von Stickstoffoxiden aus einem Abgas durch selektive Reduktion mit Ammoniak in einer Katalysatorzone, wobei
- das Abgas und das Ammoniak die Katalysatorzone während eines bestimmten Verfahrensabschnitts in der einen Richtung und während eines nachfolgenden Verfahrensabschnitts in der Gegenrichtung gemeinsam durchströmen
- die im zeitlichen Mittel zugeführte Ammoniakmenge sowohl entsprechend der im Abgas enthaltenen Menge an Stickstoffoxiden als auch entsprechend dem erreichten Reduktionsgrad der Stickstoffoxide eingestellt wird
- die Strömungsrichtung des Abgases umgekehrt wird, bevor das Ammoniak in seiner Strömungsrichtung betrachtet, aus dem Ende der Katalysatorzone austritt, sowie
- die genannten Verfahrensabschnitte beliebig oft wiederholt werden,
dadurch gekennzeichnet, daß
- die Katalysatorzone in der Strömungsrichtung des Abgases aus zwei hintereinanderliegenden, etwa gleich langen Teilzonen besteht, zwischen denen das Ammoniak in stöchiometrischer Menge, bezogen auf die im gleichzeitig eingespeisten Abgas enthaltenen Stickstoffoxide, der Katalysatorzone kontinuierlich zugeführt wird.

## Claims

1. Process for the removal of nitrogen oxides from a waste gas by selective reduction with ammonia in a catalyst zone, wherein
- the waste gas and ammonia flow through the catalyst zone together in one direction during a specific stage in the process, and in the opposite direction during a subsequent stage in the process;
- the ammonia is only supplied to the catalyst zone over a certain time span during these stages in the process in a higher than stoichiometric amount, calculated on the basis of the nitrogen oxides contained in the simultaneously supplied waste gas;
- no further ammonia is supplied to the catalyst zone for the remaining period during these stages in the process;
- the amount of ammonia supplied on an average within a given time is adjusted both in accordance with the amount of nitrogen oxides contained in the waste gas and also in accordance with the degree of reduction of the nitrogen oxides attained;
- the direction of flow of the waste gas is reversed before the ammonia exits from the end of the catalyst zone, as viewed in its direction of flow, and
- the specified stages in the process are alternately repeated as frequently as desired, characterised in that
- the ammonia enters the catalyst zone at a point located downstream, in the direction of flow of the waste gas, of the point at which the waste gas enters, and
- a catalyst zone is used which consists of at least two sub-zones.

2. Process according to Claim 1, characterised in that a catalyst zone is used which has two sub-zones of approximately equal length located one behind the other in the direction of flow of the waste gas, the ammonia being supplied between them.

3. Process according to Claim 1, characterised in that a catalyst zone (4) is used which has three sub-zones (1, 2, 3) located one behind the other in the direction of flow of the waste gas, and the ammonia is supplied between the first and second sub-zones (1, 2) during a specific stage in the process and is supplied in the opposite direction between the second and third sub-zones (2, 3) during a subsequent stage in the process.

4. Process for the removal of nitrogen oxides from a waste gas by selective reduction with ammonia in a catalyst zone, wherein
- the waste gas and ammonia flow through the catalyst zone together in one direction during a specific stage in the process, and in the opposite direction during a subsequent stage in the process;
- the amount of ammonia supplied on an average within a given time is adjusted both in accordance with the amount of nitrogen oxides contained in the waste gas and also in accordance with the achieved degree of reduction of the nitrogen oxides;
- the direction of flow of the waste gas is reversed before the ammonia exits from the end of the catalyst zone, as viewed in its direction of flow, and the specified stages in the process are repeated as frequently as desired, characterised in that
- in the direction of flow of the waste gas, the catalyst zone consists of two sub-zones of approximately equal length located one behind the other, the ammonia being continuously supplied to the catalyst zone between them in a stoichiometric amount, calculated on the basis of the nitrogen oxides contained in the simultaneously supplied waste gas.

## Revendications

1. Procédé d'élimination des oxydes d'azote d'un gaz d'échappement par réduction sélective avec de l'ammoniac dans une zone de catalyseur dans laquelle :
- le gaz d'échappement et l'ammoniac passent ensemble à travers la zone du catalyseur au cours d'une section déterminée du procédé dans un des sens et au cours d'une section suivante du procédé dans le sens opposé ;
- l'ammoniac est amené à la zone du catalyseur seulement dans un certain laps de temps, pendant le passage dans ces sections du procédé en quantité stoechiométrique, par rapport aux oxydes d'azote contenus dans le gaz d'échappement alimenté en même temps ;
- pendant le reste du temps de passage de ces sections de procédé de la zone de catalyseur, on n'amène plus d'ammoniac ;
- la quantité d'ammoniac amenée en moyenne dans le temps est ajustée aussi bien proportionnellement à la quantité d'oxydes d'azote contenue dans le gaz d'échappement, qu'en fonction du degré de réduction obtenu des oxydes d'azote ;
- le sens du courant du gaz d'échappement est inversé, avant que l'ammoniac, considéré dans son sens d'écoulement, ne sorte à l'extrémité de la zone de catalyseur, de même que,
- les passages dans les sections de procédé nommées sont souvent réitérés à volonté en alternance,
caractérisé en ce que :
- l'ammoniac entre dans la zone de catalyseur à un endroit qui est intercalé à la suite, dans le sens du courant du gaz d'échappement, à l'endroit d'entrée du gaz d'échappement, et
- on met en oeuvre une zone de catalyseur qui se compose d'au moins deux zones partielles.

2. Procédé selon la revendication 1, caractérisé en ce qu'on met en oeuvre une zone de catalyseur, qui comprend dans le sens du courant de gaz d'échappement deux parties de zone de même longueur situées l'une derrière l'autre, entre lesquelles l'ammoniac est amené.

3. Procédé selon la revendication 1, caractérisé en ce qu'on met en oeuvre une zone de catalyseur (4), qui comprend dans le sens du courant de gaz d'échappement trois zones partielles (1, 2, 3) situées l'une derrière l'autre, de même que l'ammoniac au cours d'une section déterminée du procédé, est alimenté entre la première et la deuxième zone partielle (1, 2) et au cours d'une section suivante du procédé, avec le sens opposé du courant de gaz d'échappement, il est alimenté entre la deuxième et la troisième zone (2, 3).

4. Procédé d'élimination des oxydes d'azote d'un gaz d'échappement par réduction sélective avec de l'ammoniac dans une zone de catalyseurs, dans laquelle :
- le gaz d'échappement et l'ammoniac passent ensemble à travers la zone de catalyseurs au cours d'une section déterminée du procédé dans un des sens et au cours d'une section suivante du procédé dans le sens inverse ;
- la quantité d'ammoniac amenée en moyenne dans le temps est ajustée aussi bien proportionnellement à la quantité d'oxydes d'azote contenue dans le gaz d'échappement qu'en fonction du degré de réduction obtenu des oxydes d'azote ;
- le sens du courant du gaz d'échappement est inversé, avant que l'ammoniac, considéré dans son sens d'écoulement, ne sorte à l'extrémité de la zone de catalyseur, de même que,
- les sections de procédé citées sont souvent répétées à volonté,
caractérisé en ce que :
- la zone de catalyseur se compose dans le sens de courant du gaz d'échappement de deux zones partielles sensiblement de même longueur, situées l'une derrière l'autre, entre lesquelles l'ammoniac est amené en continu à la zone de catalyseur en quantité stoechiométrique, par rapport aux oxydes d'azote contenus dans le gaz d'échappement alimenté en même temps.
